# DEMANDE DE BREVET EUROPEEN

(11) **EP 2 886 384 A1**
(43) Date de publication de la demande: **24.06.2015**
(21) Numéro de dépôt: 14198045.8
(22) Date de dépôt: 15.12.2014
(51) Int. Cl.: B60K 11/02, B60K 11/08, F01P 11/10, F04D 29/66, F04D 29/54

(54) **Ventilateur pour automobile comportant un stator**

(30) Priorité: 20.12.2013 FR 1363263
(71) Demandeur: VALEO SYSTEMES THERMIQUES, 78320 Le Mesnil Saint-Denis (FR)
(72) Inventeur: Pegues, Hervé, 92500 RUEIL-MALMAISON (FR); Zuba, Vincent, 78990 ELANCOURT (FR)
(74) Mandataire: Metz, Gaëlle

(57) **Abrégé**

Armature de support d'un dispositif de ventilation pour le refroidissement d'un fluide parcourant un circuit de refroidissement d'un véhicule automobile, ladite armature (2) comportant une ouverture (7) destinée à recevoir une hélice, et un support central (6) positionné au centre de ladite ouverture et conformé pour recevoir un moteur actionnant ladite hélice de façon à générer un flux de ventilation, ledit support central (6) étant rattaché, à travers ladite ouverture, à l'armature (2) par des bras de maintien (4), caractérisée en ce que lesdits bras de maintien s'étendent selon une forme courbe entre le support central (6) et la périphérie de ladite ouverture (7).

## Description

Le domaine de la présente invention est celui de l'automobile, et plus particulièrement celui de la circulation de l'air pour le refroidissement d'équipements du véhicule, notamment de son moteur.

Les véhicules à moteur thermique ont besoin d'évacuer les calories que génère leur fonctionnement et sont pour cela équipés d'échangeurs thermiques, notamment un radiateur de refroidissement, qui sont placés à l'avant du véhicule et traversés par de l'air extérieur. Pour forcer la circulation de l'air à travers ce ou ces échangeurs, un ventilateur est placé en amont ou en aval.

La géométrie de l'hélice étant définie, il est connu de maintenir le ventilateur par un support qui est généralement disposé en aval de l'hélice. Celui-ci peut être constitué par une buse ou une plaque plane qui est percée d'une ouverture central correspondant au passage de l'air et qui se situe dans le prolongement de l'hélice. Ce trou central est traversé par des bras de liaison qui assurent la tenue mécanique de l'ensemble et, en particulier, celle du moteur de l'hélice. Ces bras peuvent être des bras simples lorsqu'on ne cherche à leur donner qu'une fonction de tenue mécanique ou bien des bras en forme de stators lorsqu'on cherche à leur donner également une fonction aérodynamique. Les stators, à la différence des bras simples, sont formés par des éléments longilignes en forme d'ailes, avec un profil aérodynamique adapté à la vitesse et à la direction de l'air qui traverse le support d'hélice.

Il convient cependant de réduire autant que possible l'impact de ces bras ou stators sur l'écoulement qui traverse le support d'hélice, en perturbant le moins possible la circulation de cet air. L'efficacité du support et de ses bras ou stators se caractérise par un rendement aérodynamique, qui représente la perte de pression de l'air occasionnée par son passage au travers de ce support.

Divers dispositifs ont été étudiés dans ce but. On connait ainsi des bras droits, en nombre limité, qui s'étendent radialement et dont la section présente un axe de symétrie orienté selon la direction de l'axe de rotation des pales du rotor.

On connait par ailleurs des profils de stators qui sont optimisés pour présenter une trainée minimale dans le flux d'air. L'épaisseur de ces pales de stators est alors nécessairement mince et il faut augmenter de façon sensible le nombre total de pales de stators pour assurer une bonne tenue mécanique. Il en résulte un coefficient de transparence du stator, c'est-à-dire une surface frontale totale des pales comparée à la section de passage de l'air, qui est assez mauvais. Le rendement aéraulique d'un tel stator est alors faible.

Il est donc nécessaire de chercher à encore améliorer les performances aérodynamiques des ventilateurs de face avant des véhicules automobiles, notamment en obtenant un bon rendement aéraulique pour son support d'hélice, associé à une transparence élevée, tout en garantissant une bonne tenue mécanique pour ce support.

A cet effet l'invention a pour objet une armature de support d'un dispositif de ventilation pour le refroidissement d'un fluide parcourant un circuit de refroidissement d'un véhicule automobile, ladite armature comportant une ouverture destinée à recevoir une hélice, et un support central positionné au centre de ladite ouverture et conformé pour recevoir un moteur actionnant ladite hélice de façon à générer un flux de ventilation, ledit support central étant rattaché, à travers ladite ouverture, à l'armature par des bras de maintien.

Selon l'invention, lesdits bras de maintien s'étendent selon une forme courbe entre le support central et la périphérie de ladite ouverture. Par « s'étendent selon un forme courbe », on entend que lesdits bras ne sont pas rectilignes, en particulier ne sont pas radiaux. Ils présentent de la sorte des bords d'attaques et/ou des bords de fuite courbes.

La forme courbe améliore le rendement aéraulique en réduisant les recirculations d'air en aval de l'hélice et les tourbillons qui y sont associés.

Avantageusement la courbure desdits bras est constamment évolutive, dans le même sens, entre le support central et la périphérie de ladite ouverture.

De façon préférentielle la courbure desdits bras est configurée pour évoluer dans le sens de rotation de l'hélice. Cette configuration est propice à la réduction des recirculations et donc à un meilleur rendement aéraulique.

Dans un mode de réalisation lesdits bras s'étendent radialement au niveau du support central.

Et dans un mode particulier lesdits bras se raccordent à la périphérie de ladite ouverture selon un angle compris entre 30 et 60° avec le plan radial. Préférentiellement lesdits bras se raccordent à la périphérie de ladite ouverture selon un angle de 45°avec le plan radial.

Avantageusement lesdits bras ont, en coupe, une forme en U ou en V à pointe arrondie, de préférence symétrique selon la direction axiale. Lesdits bras présentent de la sorte des branches s'étendant depuis un sommet. Cette section, relativement épaisse par comparaison avec des pales de stators, donne une grande rigidité, ce qui permet de réduire le nombre de bras et donc ce qui augmente la transparence de l'armature de support.

De façon préférentielle les bras comportent en sus une nervure centrale positionnée entre les branches dudit U ou V. De cette façon on augmente encore la rigidité et on peut réduire le nombre de bras qui est nécessaire à la tenue mécanique de l'ensemble.

Avantageusement, l'armature est configurée de sorte que le sommet des bras soit tourné du côté de l'armature destiné à faire face à l'hélice. On assure de la sorte un bon écoulement du flux d'air.

L'invention porte également sur un dispositif de ventilation comprenant une hélice dont le moteur est porté par une armature de support telle que décrite ci-dessus.

Avantageusement le nombre de bras du dispositif est inférieur d'au moins deux unités au nombre de pales de l'hélice. De façon préférentielle le nombre de bras est au plus égal à 5.

L'invention porte enfin sur un module de refroidissement du moteur comprenant un dispositif de ventilation tel que décrit ci-dessus.

L'invention trouvera ses applications en particulier en tant que dispositif de ventilation et/ou module de refroidissement d'un moteur thermique placé en face avant d'un véhicule automobile.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue simplifiée et schématique d'un module de refroidissement d'un bloc moteur d'un véhicule automobile ;
- la figure 2 est une vue en perspective d'un dispositif de ventilation pour moteur d'automobile, muni de bras simples de maintien de l'hélice, selon l'art antérieur ;
- la figure 3 est une vue de l'arrière d'un dispositif de ventilation pour moteur d'automobile, muni de bras de maintien de l'hélice selon l'invention, et
- la figure 4 est une vue en coupe tangentielle d'un bras de maintien du dispositif de la figure 3.

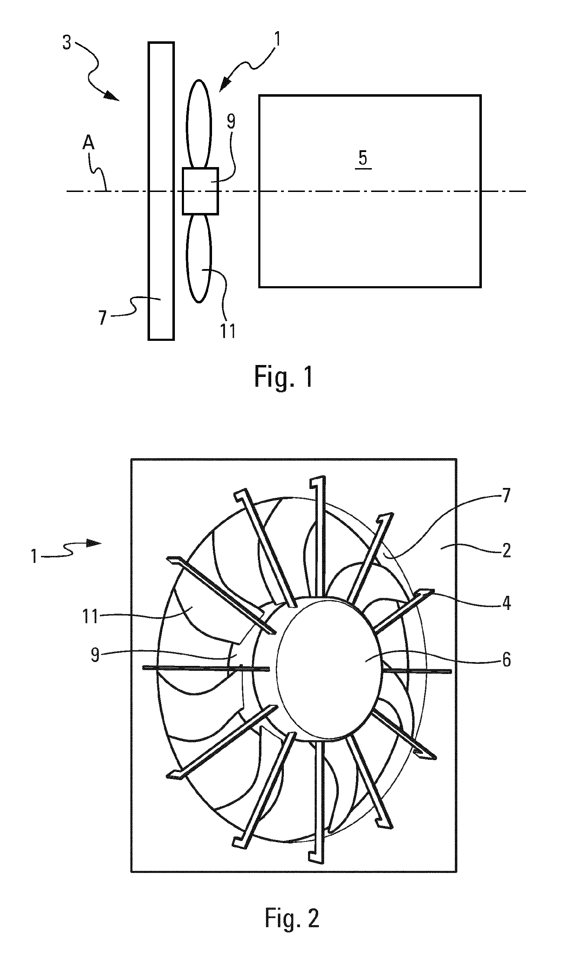

En se référant à la figure 1, on voit un module de refroidissement 3 d'un bloc moteur 5 de véhicule automobile. Il comprend notamment un dispositif de ventilation, couramment appelé ventilateur 1, et un échangeur thermique 7 tel qu'un radiateur de refroidissement. Le ventilateur 1, positionné ici entre le radiateur de refroidissement 7 et le bloc moteur 5, peut être agencé soit en avant soit en arrière du radiateur 7. Ces éléments 1, 5 et 7 sont sensiblement alignés axialement.

L'hélice du ventilateur 1 est montée en rotation autour d'un axe A. Lorsque l'hélice est entraînée en rotation, par exemple par un moteur électrique (non représenté), elle brasse l'air et l'entraîne à travers le radiateur. Le flux d'air s'écoule selon un sens d'écoulement orienté sensiblement du radiateur 7 vers le bloc moteur 5.

Dans la suite de la description, les termes « amont » et « aval » se référent au sens d'écoulement du flux d'air et les termes "radial", "axial" ou "tangentiel" se réfèrent à l'axe de rotation de l'hélice.

La figure 2 montre un ventilateur 1 de l'art antérieur, comprenant une hélice comportant des pales 11 et une buse ou support 2 formant armature pour le soutien de l'hélice et positionné ici en aval de l'hélice. Sur l'armature de support 2 sont fixés des bras 4 radiaux, qui sont disposés sur la circonférence de l'ouverture centrale 7 du support 2 pour laisser le passage au flux de ventilation. Ces bras sont des bras simples, plans, qui s'étendent radialement et qui sont orientés de façon rectiligne dans le plan radial dans lequel ils s'étendent. De ce fait ils n'interagissent pas en direction avec le flux qui traverse le ventilateur et n'ont aucune influence sur l'écoulement, si ce n'est la génération d'une force de trainée due au frottement de l'air, que l'on traduit par une diminution de la transparence du support.

Les bras 4 sont fixés, du côté périphérique de l'ouverture centrale, sur l'armature de support 2 de l'hélice et se rejoignent au centre sur un capot formant support central fixe 6. A l'intérieur de ce capot sont fixés des paliers (non visibles sur la figure) qui sont porteurs de l'axe de rotation du moyeu 9 de l'hélice. L'hélice est ainsi apte à se mouvoir en rotation au sein de l'ouverture centrale 7 pratiquée dans le support 2, sous l'action du moteur électrique qui est positionné dans le support central 6.

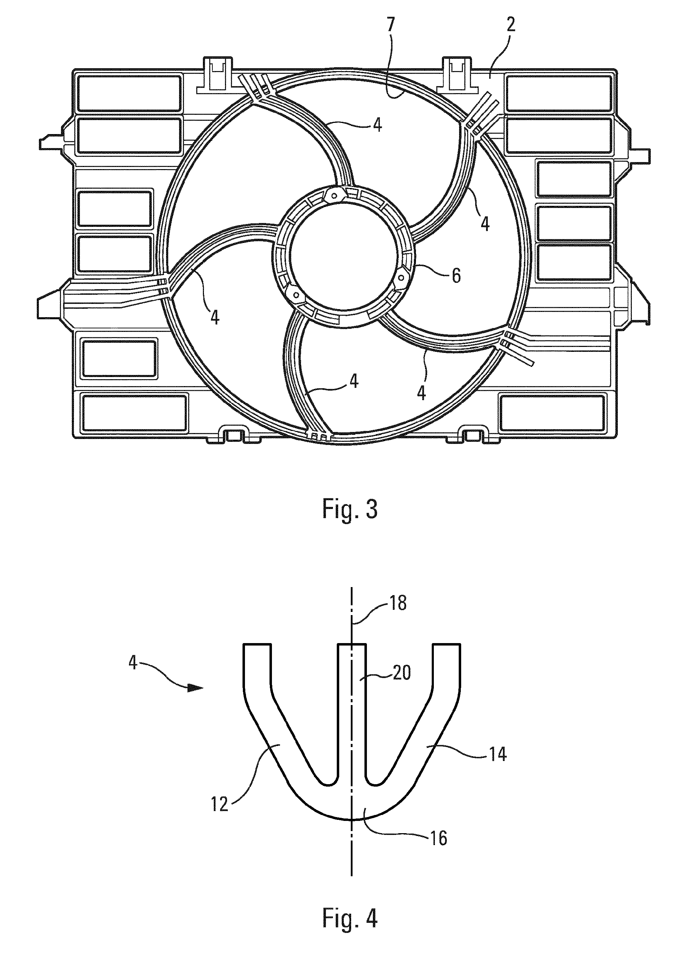

La figure 3 montre une armature ou buse, support d'hélice, 2 selon l'invention, dans une configuration à cinq bras traversant son ouverture centrale 7. A la différence de l'art antérieur les bras ont une forme courbe entre le support central 6 et la périphérie de la buse. Ceux-ci s'étendent au départ du support central, ici sensiblement radialement, pour s'infléchir progressivement par rapport à un plan radial en s'éloignant du centre de la buse, et atteindre un angle voisin de 45° avec ce plan radial lorsqu'il atteint la périphérie de la buse. Cet angle peut être différent de cette valeur selon les conditions aérodynamiques imposées par l'hélice et varier dans une fourchette allant de 30 à 60° pour garder une certaine efficacité en matière de rendement du support d'hélice 2.

Le sens donné à la courbure est, de préférence selon l'invention, le même que celui de rotation de l'hélice, qui est matérialisé par une flèche sur la figure 4.

Le nombre de bras peut varier en fonction du nombre de pales de l'hélice, dans le but d'éviter les excitations acoustiques susceptibles d'être produites par le passage des pales 11 de l'hélice devant les bras 4. Dans l'exemple représenté, qui correspond à une hélice à 7 pales, le nombre de bras est égal à cinq, comme déjà dit. On voit qu'il suffit d'un nombre relativement restreint de bras pour assurer la nécessaire tenue mécanique de l'hélice et ainsi obtenir une bonne transparence au dispositif de ventilation. Compte tenu de la rigidité des bras apportée par la forme courbe qui leur est donnée, il est possible de mettre en place un nombre de bras inférieur au nombre de pales, contrairement par exemple aux stators de l'art antérieur. Une différence de deux unités entre ces deux nombres permet en général de garantir l'absence d'excitations acoustiques.

Lesdits bras 4 sont avantageusement régulièrement espacés angulairement, autour du support central 6.

La figure 4 montre une vue en coupe tangentielle d'un bras du support d'hélice 2. Il a une forme dite V-U, qui est intermédiaire entre la forme arrondie d'un U et celle pointue d'un V et qui représente un bon compromis pour obtenir, d'une part, une trainée faible et un rendement aéraulique maximal et, d'autre part, une épaisseur suffisante pour donner la rigidité recherchée, sans trop dégrader la transparence du dispositif de ventilation 1.

Autrement dit le bras présentent deux branches 12, 14 issues d'un sommet 16 arrondie. Lesdites branches 12, 14 sont, par exemple, symétriques par rapport un axe 18 parallèle à l'axe de rotation de l'hélice. Elles comprennent ici une première portion inclinée par rapport à leur axe 18, issue dudit sommet 16, prolongée par une seconde portion parallèle à leur axe 18.

La rigidité du bras est, dans l'exemple représenté, augmentée par l'introduction d'une nervure supplémentaire 20 entre les deux branches externes du V-U, celle-ci étant orientée selon l'axe de symétrie 18 du bras. La rigidité apportée par cette nervure supplémentaire permet de réduire le nombre de bras et ainsi, même si chaque bras épais tend à dégrader la transparence du support, de garder une transparence globale faible et un rendement aéraulique élevé.

L'invention consiste donc à réduire le nombre de bras qui portent le moteur de l'hélice d'un dispositif de ventilation d'un moteur d'automobile, dans le but réduire leur impact sur la transparence du dispositif de ventilation, tout en leur donnant une épaisseur suffisante pour assurer la tenue mécanique de l'ensemble.

Le rendement aéraulique de ce dispositif est préservé en donnant, à ces bras, une forme courbe, orientée dans le sens de la rotation des pales de l'hélice. La forme courbe préconisée agit sur la turbulence observée en sortie du plan de l'hélice et réduit la recirculation de l'air en direction de l'hélice. Cela se traduit par une amélioration sensible du rendement aéraulique du dispositif de ventilation qui reste élevé, malgré l'épaisseur donnée aux bras, par comparaison avec des pales de stators qui seraient a priori mieux adaptés du fait de leur meilleur aérodynamique mais qui auraient une plus mauvaise transparence.

## Revendications

1. Armature de support d'un dispositif de ventilation pour le refroidissement d'un fluide parcourant un circuit de refroidissement d'un véhicule automobile, ladite armature (2) comportant une ouverture (7) destinée à recevoir une hélice, et un support central (6) positionné au centre de ladite ouverture et conformé pour recevoir un moteur actionnant ladite hélice de façon à générer un flux de ventilation, ledit support central (6) étant rattaché, à travers ladite ouverture, à l'armature (2) par des bras de maintien (4), **caractérisée en ce que** lesdits bras de maintien s'étendent selon une forme courbe entre le support central (6) et la périphérie de ladite ouverture (7).

2. Armature selon la revendication 1 dans laquelle la courbure desdits bras est constamment évolutive, dans le même sens, entre le support central (6) et la périphérie de l'ouverture (7).

3. Armature selon la revendication 2 dans laquelle la courbure desdits bras est configurée pour évoluer dans le sens de rotation de l'hélice.

4. Armature selon l'une des revendications 1 à 3 dans laquelle lesdits bras s'étendent radialement au niveau du support central (6).

5. Armature selon l'une des revendications 1 à 4 dans laquelle lesdits bras se raccordent à la périphérie de ladite ouverture selon un angle compris entre 30 et 60°avec le plan radial.

6. Armature selon la revendication 5 dans laquelle lesdits bras se raccordent à la périphérie de ladite ouverture selon un angle de 45°avec le plan radial.

7. Armature selon l'une des revendications 1 à 3 dans laquelle lesdits bras ont, en coupe transversale, une forme en U ou en V à pointe arrondie, présentant des branches symétriques selon la direction axiale, autour d'un sommet.

8. Armature selon la revendication 7 dans laquelle les bras comportent en sus une nervure centrale positionnée entre les branches dudit U ou V.

9. Armature selon l'une quelconque des revendications 7 ou 8 configurée de sorte que le sommet des bras est tourné du côté de l'armature destiné à faire face à l'hélice.

10. Dispositif de ventilation comprenant une hélice dont le moteur est porté par une armature de support (2) selon l'une des revendications précédentes.

11. Dispositif de ventilation selon la revendication 10 dans lequel le nombre de bras (4) est inférieur d'au moins deux unités au nombre de pales (11) de l'hélice.

12. Dispositif de ventilation selon l'une des revendications 10 ou 11 dont le nombre de bras est au plus égal à 5.

13. Module de refroidissement du moteur thermique d'un véhicule automobile comprenant un dispositif de ventilation selon l'une quelconque des revendications 10 à 12.
